# EUROPEAN PATENT APPLICATION

(11) **EP 1 316 770 A2**
(43) Date of publication of application: **04.06.2003**
(21) Application number: 02025853.9
(22) Date of filing: 19.11.2002
(51) Int. Cl.: F26B 21/08, B29B 13/06, B01D 53/26, F26B 21/04, B29C 45/17

(54) **Method and apparatus for drying plastics**

(30) Priority: 28.11.2001 IT PD20010278
(71) Applicant: Plastic Systems S.r.l., 35010 Bourgoricco (IT)
(72) Inventor: Cattapan, Gianfranco, 35011 Campodarsego (PD) (IT)
(74) Representative: Fabris, Stefano (IT)

(57) **Abstract**

A method of drying plastics materials, in particular polyester resins, is described and comprises a drying system (1) in which the steps of blowing dehumidified, heated air into a mass (6) of the plastic material to be dried, conveying the air output from the mass (6) to a cooler (16) to partially cool the air, conveying the partially cooled air to a battery of molecular sieves (21, 31) which is in service and dehumidifying the air, readmitting the dehumidified air output from the battery to heater (22, 32), and resuming the cycle from the initial step, are implemented. The method further comprises a cycle for the regeneration of the battery of molecular sieves (21, 31), in which the steps of blowing heated air through the battery of molecular sieves in course of regeneration and subsequently cooling the battery of molecular sieves are implemented; the heated regeneration air output from the battery of molecular sieves in course of regeneration is used to preheat the regeneration air input to the battery of molecular sieves in course of regeneration. A system (1) operating in accordance with the above-mentioned method is also described.

## Description

The present invention relates to a method and to a system for drying hygroscopic plastics materials, devised particularly but not exclusively for the drying of polyester resins, according to the preambles to Claims 1 and 5. The invention is also directed towards a method of drying and moulding plastics materials and towards a drying and moulding system operating in accordance with the method.

The drying of these plastics materials is a necessary preliminary operation to moulding, since inadequate control of the water content of the material reduces the final viscosity of the material and the mechanical properties of the product and may produce undesired defects in appearance, including streaking. Drying systems in which air heated and dehumidified beforehand in dehumidification plants with batteries of molecular sieves are used for this purpose.

One of the main disadvantages of the dehumidification plants used up to now results from the high overall energy expenditure of the operation to dehumidify the process air and to regenerate the molecular-sieve towers. For the drying operations, the plants in fact require air heated to above 150-170°C and dried to a dew point below -40°C. The process air returning to the batteries of molecular sieves, however, has to be cooled prior to its admission to the dehumidifying circuit and then heated again downstream of the batteries. Moreover, the batteries of molecular sieves have to be regenerated cyclically by a hot-air treatment to remove the moisture retained. Here again, the overall energy efficiency of the operation is quite low.

The above-described plants for dehumidifying the air for drying the plastics material in this field are typically connected to an injection-moulding machine housed in a moulding chamber; the air inside this moulding chamber also requires dehumidification in order not to cause the above-mentioned aesthetic defects in the product. For this purpose, a second dehumidification plant is generally provided for dehumidifying the air identified above.

In this second stage, the required degree of dehumidification of the air is considerably less than that required for the air which strikes the plastics material upstream of the moulding stage (the air blown into the moulding chamber generally has a dew point of -7/-5°C), and the technical characteristics required for the two plants are therefore also different.

The second dehumidification plant, however, has dimensions such as to satisfy the dehumidification characteristics required during the most unfavourable periods, for example, in July and August, when the air humidity is particularly high. This leads to the disadvantage that it is necessary to provide a machine of considerable power which is used at full power only for a small percentage of the operating time.

A further disadvantage is due to the fact that, when the moulding machine and the second dehumidification plant are restarted after a break in production, approximately 10 to 20 minutes elapse before the air in the moulding chamber is dehumidified correctly and, for a similar period of production time, only reject products are therefore produced, resulting in wastage of time and materials as well as an increase in overall production costs per part.

The main task of the invention is overall improvement of the energy efficiency and the operative capacity of systems of the type indicated, particularly those intended for drying polyester resins.

Within this sphere, a primary object of the invention is to provide a method and a system in which energy recovery is optimized.

Another object of the invention is to preserve the efficiency of the batteries of molecular sieves, promoting quick and improved regeneration thereof.

A further object of the invention is to provide a system for drying and moulding plastics materials which reduces the period of time for which rejects are produced owing to defects due to insufficient dehumidification of the moulding chamber.

In addition, a further object is to provide a low-cost drying and moulding system.

This task and these objects, with yet others which will become clearer from the following description, are achieved by the invention by a method and a system according to the appended claims.

The characteristics and the advantages of the invention will become clearer from the detailed description of a preferred but not exclusive embodiment thereof, described by way of non-limiting example, with reference to the appended drawings, in which:

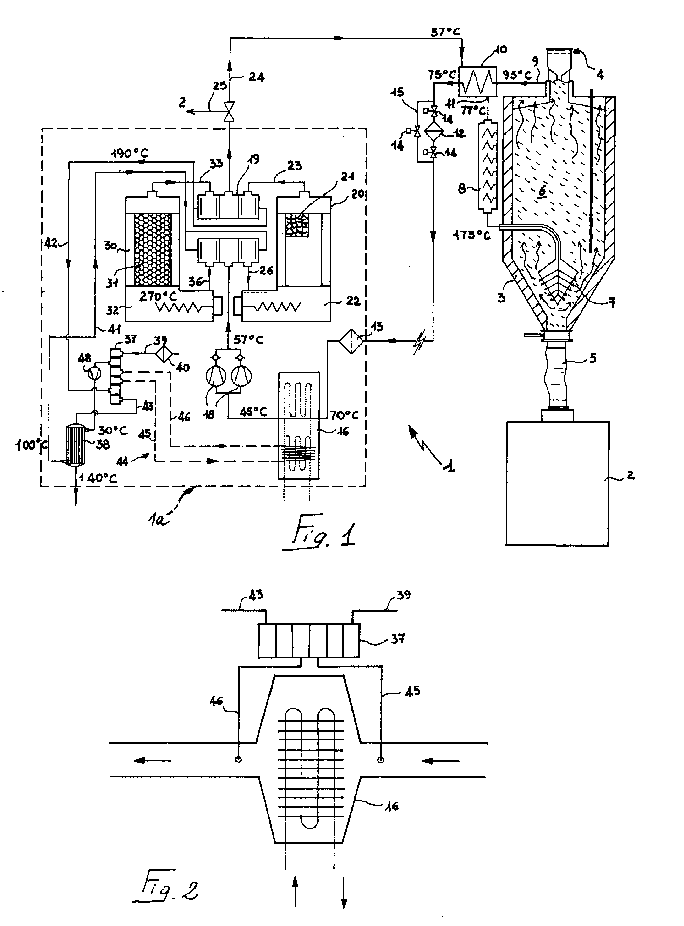

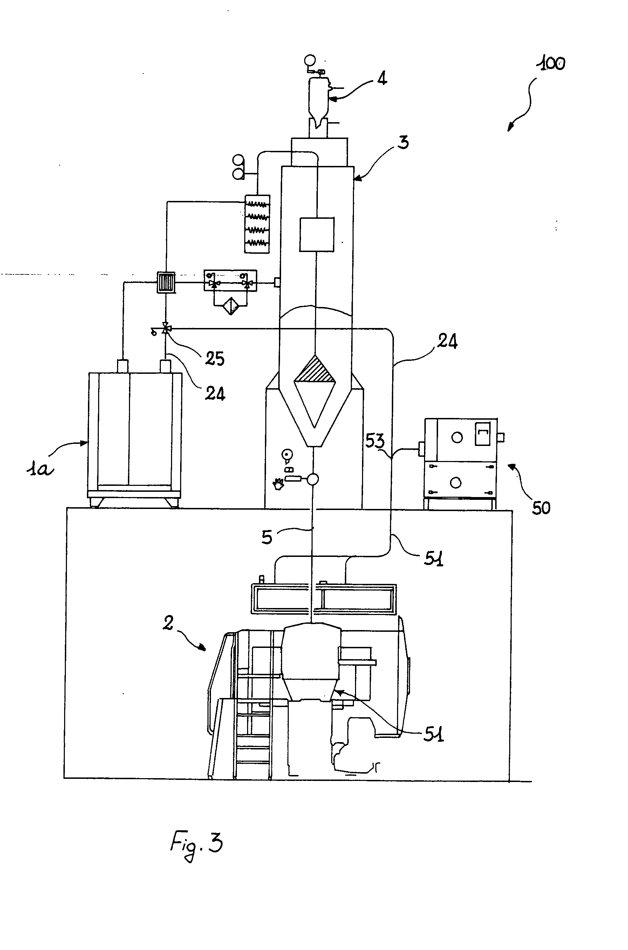

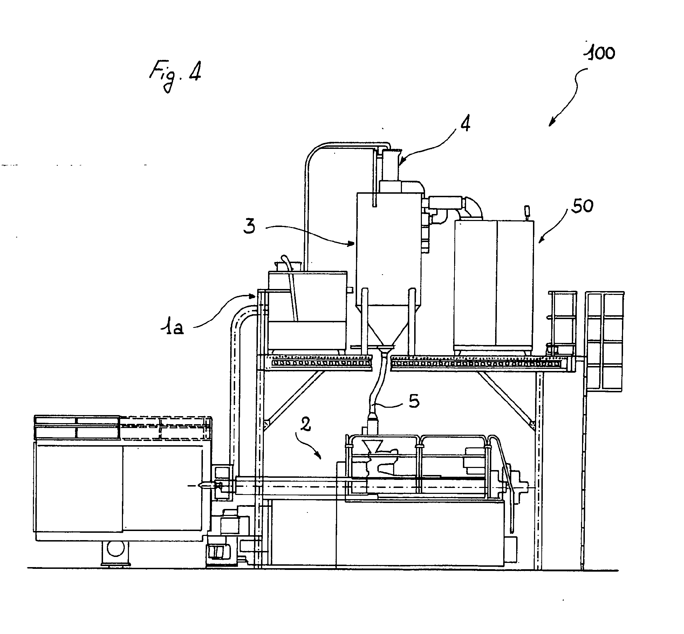

Figure 1 is a flow diagram of a system for drying polyester resins according to the invention, Figure 2 is a schematic view of a detail of the system relating to the diagram of Figure 1, Figure 3 is a block diagram of a variant of the system of Figure 1, including a moulding machine, and Figure 4 is a schematic view of the system of Figure 3.

In Figure 1, a system, generally indicated 1, for drying polyester resins (for example, PET in granules intended, in the embodiment described, for the production of preforms for bottles) is associated with a machine 2 such as an injection-moulding press, equipped for the production of such preforms.

The system 1 comprises a hopper-like container 3 which is supplied continuously, by means of a feeder 4, with material to be dried, and is connected, by means of a duct 5, to the machine 2 to be supplied.

The mass of material 6 thus flows continuously through the container 3 and the transit time, as well as the process parameters, are determined in a manner such as to achieve the required drying result.

The mass in transit is dried by the blowing of dehumidified air coming from a first dehumidification plant 1a with a dew point of between -50°C and -60°C, heated to a temperature of between 170°C and 185°C and preferably about 175°C, into the base of the mass in transit, through a diffuser 7, by means of a process circuit. The air is heated in a heater 8, for example, with electrical resistors or, alternatively, in a heater with a gas burner.

The air output from the container 3 is collected, at a temperature of about 95°C, by means of a duct 9, and is conveyed to a first, air-air heat exchanger 10 for preheating the process air supplied to the heater 8 by means of a duct 11.

The air output from the exchanger 10 to the duct 9 is sent to a filtering system including at least two filters 12, 13 in series, the first of which (with reference to the direction of flow) can be shut off by means of valves 14 which control a by-pass circuit 15. The duct 9 is extended into a second exchanger 16, for example, of the air-water type, for cooling the process air from about 70-75°C at the output from the first exchanger to a temperature of the order of about 45°C before it is sent, by means of blower compressors 18, to a distributor 19 which governs the directing of the process air to a first tower 20 which contains a first battery of molecular sieves 21.

The first tower 20 is connected to the distributor 19 by means of a duct 26 leading to a heater 22 which is at the base of the tower 20 and is inactive during the treatment of the process air, as well as by means of a duct 23 which extends from the output of the tower 20. A further duct 24 extends from the distributor 19 towards the first exchanger 10, where the process air is preheated, utilizing the heat given up by the air admitted to the exchanger 10 by means of the duct 9. A tapping valve 25 is provided in the duct 24 for tapping-off a fraction of dried air which can be used, during shutdowns of the machine 2, to maintain optimal dehumidifying conditions in the region of the moulds, preventing the establishment of an excessive degree of relative humidity therein, which would be detrimental to subsequent production stages, as described in detail below.

The first dehumidification plant 1a further comprises a second tower 30 which contains a second battery of molecular sieves 31 so that, whilst the first tower 20 is operatively in service in the plant 1a, the second tower 30 is operatively in the stage of the regeneration of its battery of molecular sieves 31, and *vice versa*. The second tower is wholly identical to the first tower, is also connected to the distributor 19 by means of respective ducts 33, 36, and is provided with a heater 32. The portion of the plant 1a intended for the regeneration of the molecular sieves further comprises a second distributor 37 and a third exchanger 38, for example, of the air-air type. During the regeneration stage, ambient air is taken in by means of a duct 39, provided with a filter 40 and leading to the second distributor 37, and is conveyed from there to the third exchanger 38, by means of a blower compressor 48.

The ambient air intended for the regeneration (the regeneration air) is preheated from a temperature of about 30°C to a temperature of about 100°C in the exchanger 38 at the expense of the exhausted regeneration air, as explained further below, and is sent to the first distributor 19, by means of a duct 41. From there, the regeneration air is supplied to the heater 32 by means of the duct 36, in order to be heated to a temperature of about 270°C and admitted to the tower 30. As the regeneration air passes through the battery of molecular sieves 31 (in the same direction as the process-air flow or in the opposite direction), it removes the retained moisture therefrom and is conveyed to the distributor 19, by means of the duct 33. From there, the exhausted regeneration air is sent, by means of a further duct 42, to the second distributor 37 which conveys its flow, by means of a duct 43, to the exchanger 38 for the preheating of the ambient air intended for the regeneration. This constitutes the regeneration circuit of the plant 1a.

The plant also comprises a circuit, generally indicated 44, for cooling the molecular sieves once they have been regenerated; this enables a fraction of the process air returning from the stage for treatment of the mass to be dried to be tapped off for use as cooling air and then to be returned into circulation as process air. The cooling circuit comprises a delivery duct 45 and a return duct 46, which are connected downstream and upstream of the second exchanger 16, respectively, and both of which are connected to the second distributor 37, for connection to the ducts 41, 42 which in turn deliver and return the regeneration air.

The regeneration procedure is carried out by admitting to the regeneration circuit ambient air which, when it has been suitably filtered through the filter 40, preheated in the third exchanger 38, and further heated to a temperature of about 270°C in the heater 32, is used to remove the moisture retained by the molecular sieves 31 during the process stage.

When the required degree of regeneration is reached, the molecular sieves of the second tower have to be cooled before being made available as process molecular sieves to replace those of the first tower (which have become saturated in the meantime). The cooling is performed by tapping-off a fraction of the process air, which has previously been filtered by the filters 12, 13 and cooled in the second exchanger 16, and which is then readmitted to the process-air circuit upstream of the second exchanger (in order to be cooled again). This arrangement enables the regenerated molecular sieves to be cooled with the use of air which is purer and drier than ambient air, thus ensuring less contamination of the regenerated molecular sieves and increasing the times between successive regeneration cycles.

A considerable energy saving is also achieved in the regeneration stage by preheating the regeneration air at the expense of the exhausted regeneration air. A further energy advantage is introduced by the recovery of heat carried out at the expense of the exhausted process air and in favour of the process air which is to be admitted to the heater 8, and which is thus preheated in the first exchanger 10.

According to a further characteristic of the invention, a system for drying and moulding plastics materials is indicated 100 in Figure 3. The system 100 comprises a drying system 1 including a dehumidification plant 1a having the characteristics described above, for dehumidifying the air blown into the plastics material, and also a second dehumidification plant 50 for dehumidifying the air in the moulding region.

In general, the moulding machine 2 is cooled continuously during operation, for example, by means of a cooling circuit with water (not shown and known *per se*), normally at a temperature of about 7°C, and is enclosed at least partially in a moulding chamber 51 with a controlled atmosphere.

The second dehumidifying plant is suitable for dehumidifying the air contained in the moulding chamber 51 so as to prevent the water for cooling the press 2 from condensing in the mould and a reject product consequently being produced owing to the presence of excess water.

The second dehumidification plant 50 admits air, heated to about 30°C and dehumidified to a dew point preferably of between -5° and -8°C, to the chamber 51 through a duct 52; the resulting air inside the chamber 51, which is not stagnant and therefore permits an exchange of air with the exterior although to a limited extent, therefore has a dew point below 7°C, that is, the temperature of the water.

As specified above, according to a particular characteristic of the invention, the moulding chamber is also arranged to be connected to the first dehumidifying plant 1a by means of the duct 24 which can be opened selectively by means of the valve 25 so that dried air coming from the first plant is admitted to the chamber 51 as required.

The duct 52 is joined to the duct 24 by means of a node 53 so that air dehumidified by both of the dehumidification plants 1a and 50 reaches the moulding chamber 51 simultaneously.

During normal operation of the system 100, solely dried air coming from the second plant 50 is sent to the moulding chamber 51 but, if the environmental parameters require greater dehumidification of the air inside the moulding chamber 51, for example, during July and/or August when the percentage of humidity in the air increases considerably in comparison with the other months of the year, the valve 25 is opened to permit a flow of dehumidified air from the first plant 1a, which is extremely hot and with a low dew point, through the duct 24 to the moulding chamber 51 so that the air inside the chamber is quickly brought to the desired humidity values for an optimal process.

The air flow coming from the first plant 1a can be varied appropriately according to requirements by choking the cross-section of the duct 24 in adjustable manner, for example, by means of the valve 25.

This tapping-off of air can also be performed when the system 100 is restarted after a shutdown period in which the machine 2 and the second dehumidification plant 50 remain inactive for a certain period of time whilst the first dehumidification plant 1 remains operating to dehumidify the air blown into the hopper 3 in order to bring the humidity value of the air inside the moulding chamber 51 quickly back to the desired values for correct operation of the system 100.

The control of the valve 25, its opening, and the adjustment of the flow of air tapped off can also be regulated by an electrical control unit which brings about opening of the valve in accordance with information coming from one or more sensors (not shown) should the dew point of the air in the chamber 52 be too high.

The invention thus affords clear advantages over conventional processes and systems; these advantages are to be seen principally in the improved overall energy efficiency of the first dehumidification plant, in the longer life of the molecular sieves, and in the efficient drying effect on the mass of material treated. Another clear advantage is achieved when, upon a temporary stoppage of the machine 2, the tapping-off of dehumidified air enables a low humidity to be maintained in the vicinity of the moulds, consequently facilitating subsequent efficient resumption of moulding operations.

Moreover, the maximum power of the second dehumidification plant can be less than in known plants by virtue of the method according to the invention which enables air to be tapped off from the first dehumidification plant when necessary so that the overall costs of the plant are reduced in this case.

Not least, the Applicant has found that this tapping-off of air from the first plant does not adversely affect the correct and effective dehumidification of the granules of plastics material in the hopper since, after a shutdown which involves solely the second plant and the moulding machine, the granules have already been dried to a large extent (the first plant is active) and the tapping-off even of a considerable flow does not therefore cause excessive variations in the humidity of the granules admitted to the machine for moulding whereas, when tapping-off takes place due to various environmental conditions, it is always limited and not such as to cause noteworthy variations in the drying of the granules.

## Claims

1. A method of drying plastics materials, in particular polyester resins, comprising a drying system (1) cycle in which the following steps are implemented:
- blowing dehumidified, heated air into a mass (6) of the plastics material to be dried,
- conveying the air output from the mass (6) to a cooler (16), to partially cool the air,
- conveying the partially cooled air to a battery of molecular sieves (21, 31) to dehumidify the air,
- readmitting the dehumidified air output from the battery to a heater (22, 32), and resuming the cycle from the initial step, as well as a cycle for the regeneration of the battery of molecular sieves (21, 31) in which the following steps are implemented:
- blowing heated air through the battery of molecular sieves (21, 31) in course of regeneration, and
- subsequently cooling the battery of molecular sieves,
**characterized in that** the heated regeneration air output from the battery of molecular sieves (21, 31) in course of regeneration is used to preheat the regeneration air input to the battery of molecular sieves (21, 31) in course of regeneration.

2. A method according to Claim 1 in which the heated air output from the mass (6) of material to be dried is used to preheat the dehumidified air output from the battery of molecular sieves (21, 31) which is in service.

3. A method according to Claim 1 or Claim 2 in which a fraction of the air output from the mass (6) of material to be dried is used to cool the battery of molecular sieves (21, 31) in course of regeneration.

4. A method according to Claim 3 in which the said fraction of air is drawn off downstream of the cooler (16) and is readmitted upstream thereof, with reference to the direction of flow.

5. A system (1) for drying plastics materials, in particular polyester resins, in accordance with the method of one or more of the preceding claims, comprising at least two batteries of molecular sieves (21, 31) which are in service and in course of regeneration alternately, at least one container (3) for the mass (6) of material to be dried, at least one cooler (16) of the process air returning from the container (3), at least one heater (22) of the process air, at least one regeneration circuit for the batteries of molecular sieves (21, 31), for regenerating the battery which is in course of regeneration, and at least one heater (32) of the regeneration air, associated with the regeneration circuit,
**characterized in that** it comprises a heat exchanger (38) associated with the regeneration circuit for reheating the regeneration air which is admitted to the circuit upstream of the heater, utilizing the residual heat of the regeneration air, downstream of the battery of molecular sieves (21, 31) which is in course of regeneration.

6. A drying system (1) according to Claim 5 in which a heat exchanger (10) is provided, associated with the process-air return circuit, in order to preheat the process air upstream of the process-air heater (8).

7. A system (1) according to Claim 5 or Claim 6 in which a tapping arrangement, subservient to a machine utilizing the system, is provided in the process-air circuit, downstream of the batteries of molecular sieves.

8. A system (1) according to any one of Claims 5, 6 and 7, in which means (37) are provided for selectively connecting the cooler for the process air returning from the container (3) to the regeneration circuit for the cooling of the batteries of molecular sieves (21, 31), after the regeneration stage.

9. A method of drying and moulding plastics materials, comprising the steps of:
- blowing dehumidified, heated air coming from a first dehumidification plant (1a) into a mass (6) of the plastics material to be dried,
- conveying the dried plastics material (6) to a moulding machine (2) comprising a mould housed at least partially in a moulding chamber (51),
- blowing dehumidified air coming from a second air dehumidification plant (50) into the moulding chamber (51),
**characterized in that** it comprises the step of:
- selectively tapping off dehumidified air from the first dehumidification plant (1a), in dependence on values of parameters of the air in the moulding chamber (51), in order to blow the dehumidified air into the moulding chamber (51).

10. A method according to Claim 9 in which the tapping-off takes place in dependence on the percentage of humidity in the moulding chamber.

11. A method according to Claim 9 or Claim 10 in which the tapping-off takes place during restarting stages of the moulding machine (2).

12. A method according to Claim 10 or Claim 11 in which the tapping-off takes place when the dew point of the air in the moulding chamber (51) is such as to cause condensation of water vapour on the mould.

13. A method according to one or more of Claims 9 to 12 in which the flow of air tapped off from the first plant is adjustable.

14. A system (100) for drying and moulding plastics materials, comprising:
- a machine (2) for moulding plastics material (6), comprising a mould housed at least partially in a moulding chamber (51),
- a system (1) for drying the plastics material, including a first air dehumidification plant (1a) suitable for drying the plastics material (6) upstream of the moulding machine (2),
- a second dehumidification plant (50) suitable for dehumidifying air contained in the moulding chamber (51),
**characterized in that** it comprises:
a tapping duct (24) from the first dehumidification plant (1a) which can be opened selectively in order to blow dehumidified air from the first plant (1a) into the moulding chamber (51).

15. A drying and moulding system (100) according to Claim 14 in which the tapping duct (24) can be opened selectively by valve means (25).

16. A drying and moulding system (100) according to Claim 15 in which the valve means (25) can vary the flow-rate of air tapped off from the first plant (1a).

17. A drying and moulding system (100) according to Claim 15 or Claim 16 in which the valve means are opened in dependence on values of parameters of the air in the moulding chamber (51).

18. A drying and moulding unit according to one or more of Claims 14 to 17 in which the system (1) for drying plastics material is formed in accordance with one or more of Claims 5 to 8.
